# EUROPEAN PATENT APPLICATION

(11) **EP 1 944 922 A1**
(43) Date of publication of application: **16.07.2008**
(21) Application number: 07290037.6
(22) Date of filing: 10.01.2007
(51) Int. Cl.: H04L 12/56

(54) **Method of providing QoS**

(71) Applicant: Alcatel Lucent, 75008 Paris (FR)
(72) Inventor: Oberle, Karsten, 68199 Mannheim (DE); Kessler, Marcus, 70329 Stuttgart (DE)
(74) Representative: Zinsinger, Norbert

(57) **Abstract**

The invention concerns a method of providing quality of service in an IP-based real-time communication session, and a quality of service manager (60) to execute this method. A connection (105) is set up between a first device (100) and a second device (110) via at least one network (2, 3) for an establishment of said real-time communication session between a calling party associated with the first device (100) and a called party associated with the second device (110). Network resources for said real-time communication session are reserved in the at least one network (2, 3). After the establishment of said real-time communication session, a traffic volume associated with said real-time communication session is measured in the at least one network (2, 3) and the reserved network resources are dynamically adapted on the basis of said measurement.

## Description

The present invention relates to a method of providing quality of service in an IP-based real-time communication session, and a QoS manager to execute said method (QoS = Quality of Service).

For the implementation of resource allocation and reservation mechanisms for QoS management, it is necessary that the involved service controllers, e.g., a CSCF in an IMS-based network, have knowledge about the network resources needed for that service (CSCF = Call State Control Function; IMS = IP Multimedia Subsystem; IP = Internet Protocol). Network-agnostic, the end-to-end protocol SIP, at its core, opens up communications between two intelligent end points (SIP = Session Initiation Protocol). To request the required resources from the network, the service controller has to derive this information from the SIP signalling flow, i.e., the service request.

Unfortunately, the information provided by SIP is not unequivocal, i.e., the intersection of a set of codecs indicated by the clients via SDP during session establishment can contain more than one codec (codec = coding-decoding; SDP = Session Description Protocol). This may be the case, e.g., if both clients support the same multiplicity of different codecs. As a consequence, the service controller does not know which codec will be eventually chosen by the client out of this intersection list of possible codecs and which bandwidth is actually required for this service.

Currently, there seem to exist two compromise solutions to answer this problem. A first solution may be that the service controller chooses the codec with the highest bandwidth requirement. Consequently, the service is definitely enabled. However valuable network resources, in particular in the access network, are wasted if the actually used bandwidth is lower than the reserved one. Another solution may be to make use of the bandwidth field in the SIP/SDP header. However, this is not a practicable option because it is only after establishing the SIP session (INVITE - 200 OK - ACK) that the clients have to choose a codec out of the intersection list. This is "too late" to include this information in SIP/SDP messages to inform the service controller. To be utilizable in due time by the service controller, the client would need to signal the bandwidth information before the client itself knows, i.e., before the end of the negotiation between the clients at session establishment.

Kishore, Mukul, "Optimal Link Utilization and Enhanced Quality of Service Using Dynamic Bandwidth Reservation for Pre-Recorded Video", M.Sc. Thesis, Virginia Polytechnic Institute and State University, Alexandria VA, 2003, describes a Renegotiated Constant Bit Rate (= RCBR) service for streaming video traffic. This dynamic bandwidth reservation approach removes the wastefulness effected by a constant bandwidth reservation level. However, the proposed approach is usable only if the traffic pattern over time is already known, e.g., in the case of pre-recorded videos.

DE 102 28 597 A1 describes the establishment of a bandwidth-sensitive real-time connection between terminals with a SIP server using a SIP protocol whereby the SIP server checks the availability of bandwidth for transmitting data and/or reserves network bandwidth. The reservation of bandwidth by the SIP server is optimized in a way so that adequate service quality is guaranteed and only little bandwidth remains unused.

US 2002/0041590 A1 describes a method how the individual protocols SIP, RSVP, COPS, and OSP can be used together in a consistent way to setup, maintain, and tear down Internet communications having an acceptable QoS (RSVP = Resource Reservation Protocol; COPS = Common Open Policy Service; OSP = Open Settlement Protocol). An integration of a QoS signaling with a SIP signaling is proposed which provides feedback during call setup on whether media streams receive a requested QoS. Therefore, the SIP application is able to react according to this feedback received during call setup. For example, the communication setup may be suspended if a requested QoS cannot be guaranteed. However, the aforementioned issue of how to handle the equivocal information provided by SIP is not addressed.

It is the object of the present invention to provide an improved management of network resources.

The object of the present invention is achieved by a method of providing quality of service in an IP-based real-time communication session between a calling party associated with a first device and a called party associated with a second device, the method comprising the steps of setting up a connection between the first device and the second device via at least one network for an establishment of said real-time communication session, reserving network resources for said real-time communication session in the at least one network, whereby the method comprises the further steps of measuring, after the establishment of the real-time communication session, a traffic volume associated with said real-time communication session in the at least one network and dynamically adapting the reservation of network resources on the basis of said measurement. The object of the present invention is further achieved by a quality of service manager for providing quality of service in an IP-based real-time communication session established between a calling party associated with a first device and a called party associated with a second device via at least one network, wherein network resources for said real-time communication session are reserved in said at least one network, the quality of service manager comprising an interface for receipt of a measurement of a traffic volume associated with said real-time communication session in the network after the establishment of said real-time communication session and a control unit for control of a dynamic adaptation of the reservation of network resources on the basis of said measurement received after the establishment of said real-time communication session.

Network resources comprise resources that have to be made available for a session within a network for the execution of the session. Network resources may comprise transport bandwidth and resources and capabilities with respect to network nodes such as gateways, switches, etc. In the following description, the terms "network resources" is, primarily but not exclusively, meant to denote bandwidth.

The measurement of the traffic volume within a network provides the network provider with significant information. On the basis of the gathered information, the network provider can control the optimal use of the network resources. A network provider can use and sell the maximum possible bandwidth (maximum fill rate) of his network to other operators by measure and overbook.

Because of the network measurement in different network parts showing the real used bandwidth, e.g., from a NAP towards a dedicated ASP, it is possible to charge the ASP only for the real used bandwidth (NAP = Network Access Provider; ASP = Application Service Provider).

The adaptation of the reserved network resources prevents that valuable bandwidth resources remain unused. A network provider is enabled to re-use network resources that have been released through the adapation for additional sessions and thus to take full advantage of the network resources.

Further advantages are achieved by the embodiments of the invention indicated by the dependent claims.

According to a preferred embodiment of the present invention, an ASP requests and reserves the maximum possible amount of bandwidth resources, in particular bandwidth in his respective network. This gives the user the maximum degree of freedom to select the codec and the bandwidth respectively he wants to use. The terminals (user agents) associated with a real-time communication session - depending on their hardware/software capabilities - only support a limited set of codecs. The maximum possible amount of bandwidth is determined as the maximum value of bandwidths corresponding to the set of supported codecs.

After establishment of the session, the traffic volume associated with the session is measured. The involved network providers, especially the NAPS, each at his own network because of their specific knowledge of the network, measure the real traffic. For this purpose, the network providers may preferably utilize bandwidth measurement units. The amount of network resources corresponding to the measured traffic, e.g., the actually required bandwidth to enable the measured traffic volume, are determined. Then, the amount of network resources that has been reserved for the session to the maximum possible amount of bandwidth is dynamically, i.e., during the on-going session, decreased to the actually required amount of session bandwidth as determined through the traffic volume measurement. The determination of an amount of network resources corresponding to the actually used traffic volume may be done by a network node with conversion capability, e.g., holding a conversion table for converting a traffic volume (e.g., packets per time unit) to network resources. It is possible that the described steps of measurement, network resource correlation and adaptation are controlled and/or executed by the QoS manager.

Preferably, the measurement of the traffic volume associated with the session is executed by identifying packets associated with the session and counting the rate of these packets, i.e., the number of packets transmitted per time unit. The packet identification may be possible by checking a sender ID and/or a destination ID and/or a session ID comprised within the packets, e.g., in the packet header.

Preferably, the measurement of the traffic volume associated with the session is executed at bottlenecks of the networks involved in the media data transport associated with the session. It is advantageous to measure the traffic volume at one or more edge nodes of a network, e.g., an access edge node of an access network or a service edge node of an application/service network.

In order to achieve a better congruence of reserved and actual used bandwidth, the involved network providers can resort to accumulated experience of service provision. That means that a provider of a network may keep statistics about the commonly needed bandwidth in connection with a specific service. According to a preferred embodiment of the invention, the actually used amount of network resources of a session are determined and stored, together with parameters characterizing the session, in a storage device for later analysis. After handling a plurality of sessions this way, statistics can be established on the basis of the measurements and the associated session parameters. Session parameters characterizing a session may include identities of parties participating in the session, specifications of the devices used as session terminals, type of media data exchanged during the session, external session conditions such as time of day, working day/holiday, geographic origin/destination of the session, etc.

Thus, it is possible to predict an anticipated bandwidth requirement for a session which is to be established. For example, the QoS manager compares data characterizing a session being initiated with data dealt with in the statistics. If the QoS manager detects one or more correlating features, the QoS manager can make a prediction/estimation of the required amount of bandwidth based on the aggregated experience kept in the statistics. The QoS triggers a reservation of an amount of network resources, particularly of bandwidth, needed for the session according to the prediction based on the statistics. When the session is actually running, the bandwidth prediction can be analyzed, i.e., compared with the actual required amount of network resources. The statistics may then be updated by incorporation of the analysis results, e.g., by taking the traffic measurement of the current session into consideration.

Those statistics can be kept with different granularity from averaging over the media traffic within the whole network environment down to a statistic per customer bound by contract to the provider. Additionally, if those statistics will be kept also with respect to the time of a service request, a bandwidth reservation may be prepared in advance in anticipation of specific customer behavioural pattern. Preferably, the statistics comprise a whole range of different aspects of the network resources. It is possible that the statistics deal with an average value that comprises an entirety of the network environment involved in the session. For example averaged over all users of a network, a Video-on-Demand download rate may be generally high in the network on Saturday evenings. On the other end of the range, its is also possible that the statistics also allow to make a statement about network resources with repect to individual users, based on user-specific behaviour patterns. For example, a specific user may have never downloaded a video from the Internet on Saturday evenings, but instead does on Sunday mornings.

According to another preferred embodiment of the invention, network resources may be reserved, e.g., by the QoS manager, for a session to be established based on said statistics. That means that a prediction of an amount of bandwidth needed for a session to be established is made on the basis of the statistics and the predicted value is reserved. After the session has been established, the actually used amount of bandwidth resources is determined by means of a measurement of the traffic volume needed for the session. If the measurement shows that the session actually requires a lower/higher bandwidth than the initially reserved bandwidth, the bandwidth allocated to the session is dynamically, i.e., during the on-going session, adapted to the actually needed value. In addition, the statistics are updated by taking the traffic measurement of the current session into consideration.

Theoretically, adaptation of the reservation of network resources may mean either decreasing the amount of network resources reserved or increasing the amount of network resources reserved because the initially reserved amount of network resources may be chosen either too high or too low. Practically, however, the QoS management system will preferably be adjusted to choose the initially reserved amount of network resources (a bit) too high (if not the maximum possible amount of bandwidth will be chosen, anyway), so that a correction step will decrease this initially chosen value to the actually used, lower bandwidth value.

According to another preferred embodiment of the invention, the identity of the calling party and/or the called party may be determined through IP-adresses of the first device and/or the second device. Then, a user data base specifying user-specific data of the calling party and/or the called party may be accessed, e.g., by the QoS manager. The user data base may comprise user data that have been aggregated when the user made a contract with the network provider. It may also comprise user data that have been accumulated by the network provider or the QoS manager by monitoring the user behaviour. And it may comprise user data that have been provided by the user themselves, e.g., user-specific preferences and rejections. The data extracted from the user data base allow to tailor in advance a bandwidth reservation to the actual needs of a user. Thus, these user data may be used for the adaptation of the reservation of the network resources.

In a preferred embodiment, a second real-time communication session may be admitted to the network, e.g., triggered by the QoS manager, when network resources are released by the adaptation of the reservation of network resources reserved for a first session. This allows a network provider to dynamically re-use released network resources for the second session during the on-going first session instead of dead-locking a bandwidth status-quo for the duration of the first session the bandwidth requirements of which had been misjudged. This represents a kind of "overbooking" mechanism, i.e., the network provider may admit more concurrent sessions to his network as would have been guessed from the associated codec lists.

Knowing the real used bandwidth in their network, the network providers are able to "overbook" the network resources of their network more and more until the measurement on network level indicates to stop because of, e.g., a physical bottleneck (booked interface, ...). Therefore, this overbooking may be limited to a maximal extent defined on the basis of the measured traffic volume, i.e., the network provider cannot admit more sessions to his network than is physically possible because of the limited bandwidth available in the network (a hard physical upper limit). Overbooking to that maximal extent can be a starting point for a new provider to handle bandwidth reservations.

According to another preferred embodiment of the invention, the packets associated with a session are provided with an indication of the adapted amount of network resources allocated to the session, i.e., an update information with regard to the amount of required network resources. Thus, it is straightforward to announce the adapted (decreased/increased) bandwidth intended for the session to all networks and network parts within the network environment handling the session. The derived update information is sent to a responsible QoS manager of a network whereby said QoS manager is responsible for transmitting the update information to all network nodes involved.

In a preferred embodiment of the invention, every network involved in an IP-based real-time communication session comprises its own QoS manager according to the present invention. The management of network resources of a network is done by a resource manager associated with the network. Likewise, the adaptation of a reservation of network resources of the network for QoS purposes is done by the QoS manager associated with the network. According to the present invention, this QoS manager is an addition to said resource manager associated with the network. Thus, the invention provides a decentralized architecture, i.e., specific to every network involved in the session, of an adapation of reservations of network resources.

These as well as further features and advantages of the invention will be better appreciated by reading the following detailed description of presently preferred exemplary embodiments taken in conjunction with accompanying drawings of which:
- Fig. 1: is a block diagram of a communication session according to an embodiment of the invention.
- Fig. 2: is a block diagram of a communication session according to another embodiment of the invention.
- Fig. 3: is a message flow sequence relating to the embodiment of Fig. 2 for the initial bandwidth reservation.
- Fig. 4: is a message flow sequence relating to the embodiment of Fig. 2 for the adaptation of the initial bandwidth reservation.

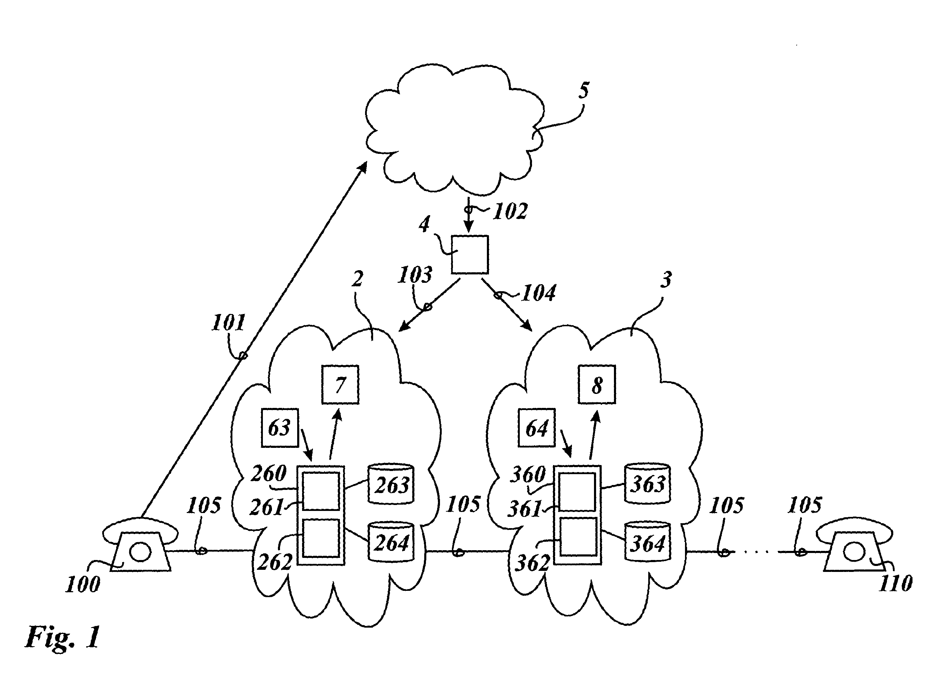

Fig. 1 is a diagram showing a schematic architecture for the establishment and operation of a real-time communication session. The session is set up in an end-to-end scheme, e.g., based on the SIP protocol, between a calling party using a first device 100, hereafter named calling device, and a called party using a second device 110, hereafter named called device, in a packet-based network environment comprising an access network 2 and a core network 3, e.g., both based on the IP. The packet-enabled networks 2, 3 which are used for an exchange of real-time media data, e.g., audio data of a VoIP telephone call or audiovisual data of a video conference, may comply with the NGN, IMS and/or TISPAN requirements (NGN = Next Generation Network; TISPAN = Telecommunications and Internet converged Services and Protocols for Advanced Networking).

The access network 2 may be operated by a network provider who provides the calling device 100 with an access to the network environment, e.g., a telephone company operating telephone lines from a switch to every telephone user of a specific neighbourhood. The core network 3 may be operated by a network provider who offers and provides telephone users with an application service such as a VoIP contract or a videoconference service, i.e., by an application provider.

Before real-time media data can be exchanged via the communication session, the device 100 of the calling party has to negotiate the mode and conditions of the communication connection, e.g., QoS, packet coding/decoding, etc., with the device 110 of the called party. It is only after the calling device 100 and the called device 110 have agreed on a common mode that the communication session can assume operation and media data can be exchanged between the calling device 100 and the called device 110.

The signalling associated with the session initiation (and the session termination) may be done using SIP. The calling device 100 and the called device 110 may be SIP telephones, e.g., a telephone set adapted to handle SIP telephone calls or a SIP softphone, i.e., a computer with a software providing the computer with SIP telephone capability. To initiate the real-time session, the calling device 100, i.e., the UAC (= User Agent Client), sends a service request 101 addressed to the called device 110. The service request 101 is transmitted on a signalling and controlling level of the network environment 2 and 3 into the direction of the called device 110 and received by a service controller 5 of a service provider offering a respective real-time service through the core network 3, e.g., by a CSCF in an IMS environment. The service controller 5 acts as a SIP proxy. The service request 101 comprises a list of codecs which are supported by the calling device 100.

The service controller 5 sends a message 102 with the codec list to a resource scheduler 4. It is also possible that the service controller 5 has the codec list translated into corresponding bandwidth requirements and that the message 102 comprises the corresponding bandwidth requirements. Each codec comprised within the codec list is associated with a specific bandwidth requirements. For example, a videoconference application allowing the transmission of multi-coloured, high-resolution pictures has a higher bandwidth demand than a videoconference application allowing the transmission of black/white, low-resolution pictures. Thus, the codecs specified in the codec list may be arranged according to their respective bandwidth requirement from minimal to maximal bandwidth requirement.

The resource scheduler 4 receives the message 102 and sends corresponding reservation requests 103, 104 to the access network 2 and the core network 3 for reservation of the maximum possible bandwidth corresponding to the codec list. The access network 2 and the core network 3 reserve the requested maximum bandwidth within their respective bandwidth resources. Apart from the described service controller 5 and the networks 2 and 3, also other service provider nodes and media transport networks may be present and involved in the communication session, a fact which is to be indicated by the dots in Fig. 1.

Because of the reservation of a maximum possible bandwidth, the session to be established over the media connection 105 via the access network 2 and the core network 3 will definitely not be limited by lack of bandwidth and the QoS of the session is guaranteed. This gives the calling device 100 and the called device 110 the maximum degree of freedom to select the codec and the bandwidth, respectively, they want to use for the current real-time session. The calling device 100 and the called device 110 autonomously choose one of the possible codecs out of the codec list after negotiation on signalling level (SIP) between the calling device 100 and the called device 110. By using the SIP protocol, the negotiation may be done using the SIP message sequence INVITE - 200 OK - ACK.

During the session, each network provider of the media transport networks 2, 3, especially the NAPs, uses a measurement unit 63, 64 for measuring the bandwidth actually used for the traffic associated with the session through the media connection 105. The measurement units 63, 64 are preferably implemented into network edge nodes of the media transport networks 2, 3. The measured actual bandwidth values enable the providers to estimate the real bandwidth requirements of the session through the media connection 105 in comparison with the reserved bandwidth. If the actually used bandwidth is lower, or, according to a preferred embodiment significantly lower than the initially reserved bandwidth, the providers of the media transport networks 2, 3 reduce in their networks the extent of the reserved bandwidth resources for the communication session. Thus, the network providers are able to re-use the released network resources for other, additional sessions. In a sense, the network providers can "overbook" the network resources of their networks and admit also other sessions.

Each involved network provider, each at their own network 2, 3 because of their specific knowledge of their network 2, 3, measures the real traffic volume at the bottlenecks of their networks 2, 3. Usually, the measurement points are the network edge nodes, e.g., the access nodes, access edge nodes, service edge nodes, etc.

In a preferred embodiment, the measurement results specifiying the actually used traffic volumes measured by the measurement units 63, 64 are reported to resource managers 260, 360. The resource managers 260, 360 may also be called "QoS managers". Each of the networks 2, 3 involved in the establishment of the communication session comprises a QoS manager 260, 360, respectively, of its own and responsible for providing QoS in the networks 2, 3, respectively. The resource manager 260, i.e., the QoS manager 260, and the resource manager 360, i.e., the QoS manager 360, may be additional modules or functions of "normal" resource managers 7, 8 present in the networks 2, 3. For example, the QoS manager 260 may be part of the resource manager 7, e.g., an A-RACF in TISPAN for an access network (A-RACF = Access Resource Admission Control Function). Alternatively, the QoS managers 260, 360 are represented by dedicated, separate units of their respective networks 2, 3.

The QoS manager 260 of the network 2 and the QoS manager 360 of the network 3, respectively, have connections to measurement data bases 263, 264 and user databases 363, 364, respectively. The databases 263, 363 may be used as storage units for the measured traffic volumes from the measurement units 63, 64. The QoS managers 260, 360 receive the measured traffic volumes from the measurement units 63, 64 and collect them in the storage units 263, 363. Also, the QoS managers 260, 360 refer to the data bases 264, 364 comprising gathered session-specific statistics about users bound by contract to one of the network providers operating the networks 2 and 3.

The measurement result of a traffic volume is dependent on parameters defining the session. Session parameters may be, e.g., type and capabilities of the devices used for the session, a media type associated with said communication session, the time when the real-time communication session is established, user-specific preferences of the device users, etc. Thus, each measurement sample can be associated with one or more session parameters.

After several associations have been established and collected, statistics can be built which allow to see trends. The statistics may indicate a commonly needed bandwidth with respect to a specific service.

After collecting the measurement results from the network nodes 63, 64 by the QoS managers 260, 360, the QoS managers 260, 360 report to their respective "normal" resource managers 7, 8. The reports comprise information whether a bandwidth allocated to a specific session has to be adapted to an actually measured bandwidth value. The "normal" resource managers 7, 8, in turn, inform their respective network 2, 3 about the reported changes in the bandwidth allocated to a specific session.

Each QoS managers 260, 360 comprises a respective interface 261, 361 for intercommunication with the measurement nodes 63, 64 and the "normal" resource managers 7, 8. Moreover, each of the QoS managers 260, 360 comprises a respective control unit 262, 362 to control and manage the collection of measurement data, the establishment of statistics and the initiation of bandwidth adaptation based on said measurement data and said statistics. Preferably, the control unit comprises a processing unit for the execution of a computer software product specifying the QoS manager-specific steps according to the present invention.

The QoS managers 260, 360 can prepare a bandwidth reservation in advance of a session in anticipation of a specific user behavioural pattern. Thus, when a session is set up, the QoS managers 260, 360 may guess from the current time an estimate of the required bandwidth. Second, when the QoS managers 260, 360 receive an indication about a media data type, the first estimate can be improved to a more accurate estimate. If the QoS managers 260, 360 in addition know the users involved in the session (users in SIP networks are identified by unique SIP addresses), the QoS managers 260, 360 look up the user data base 264, 364 and identify the used devices and the anticipated bandwidth requirements. Thus, the QoS managers 260, 360 reserve bandwidth resources for the session to be established by means of the established statistical resources and/or user-specific data.

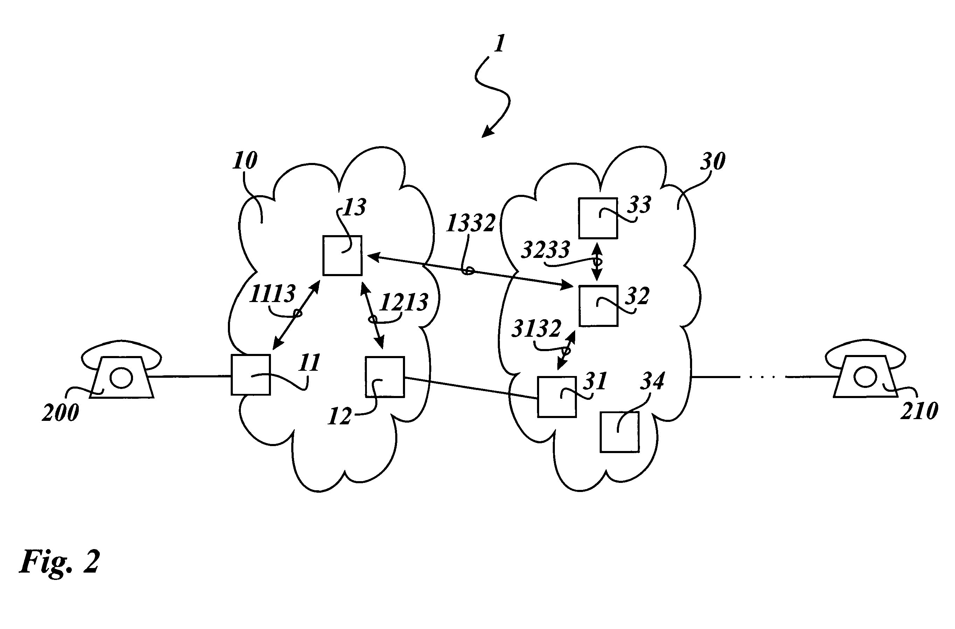

Fig. 2 is a diagram where the general architecture of Fig. 1 has been mapped onto a current status of the ETSI/TISPAN architecture, showing the different building blocks, respectively interfaces, as currently defined in ETSI/TISPAN (ETSI = European Telecommunications Standards Institute). Fig. 2 shows one leg 1 of a typical end-to-end network architecture for a real-time service offered by a service provider, e.g., an ASP. The other leg is omitted to increase the clarity; its existence is indicated by dots and a communications device 210 of a called party.

The architecture leg 1 comprises a communications device 200, e.g., a VoIP softphone, of a calling party. The VoIP softphone is built by a software running on a computer with access to a telecommunication network and providing the computer with functionalities to process a VolP telephone call. The communications device 200 is connected to an access network 10 operated by an access network provider. The access network 10 comprises an access node 11, an access edge node 12 and an A-RACF 13, whereby the A-RACF 13 is a functional element that provides admission control and network policy assembly. The A-RACF 13 is interconnected with the access node 11 and the access edge node 12 using interfaces Ra 1113 and Re 1213.

The access network 10 is connected to an application network 30 which is operated by an application/service provider. The application network 30 comprises a service edge node 31, a resource scheduler 32, and an application function (= AF) 33. According to the ETSI/TISPAN architecture, the resource scheduler 32 may be a SPDF/RACS unit, and the AF 33 may be a P-CSCF unit (SPDF = Service-based Policy Decision Function; RACS = Resource and Admission Control Subsystem; P-CSCF = Proxy Call Session Control Function). The communication between the AF 33 and the resource scheduler 32 is done via the Gq' interface 3233, the communication between the resource scheduler 32 and the service edge node 31 via the interface la 3132, and the intercommunication between the A-RACF 13 and the resource scheduler 32 via the interface Rq 1332.

The connection between the application network 30 and the called party 210 may be provided through one or more additional networks which are indicated by the dots in Fig. 2.

Within the ETSI/TISPAN-based networks 10 and 30, a QoS management functionality according to the present invention has been provided. A dedicated unit 34 operating as QoS manager has been installed in the network 30 whereby the QoS manager 34 comprises the entirety of the QoS management functionality in the network 30 according to the invention. The QoS manager responsible for the QoS management functionality in the access network 10 according to the invention has been implemented as an addition to the "normal" resource manager of the access network 10, e.g., as an additional QoS module into the A-RACF 13.

However, it is also possible that in the aforementioned embodiment where a dedicated QoS manager 34 has been provided, the QoS manager 34 may be composed of one or several interlinked computers, i.e., a hardware platform, a software platform basing on the hardware platform and several application programs executed by the system platform formed by the software and hardware platform. The functionalities of the server 34 are provided by the execution of these application programs. The application programs or a selected part of these application programs constitute a computer software product providing a QoS management service according to the present description, when executed on the system platform. Further, such computer software product is constituted by a storage medium storing these application programs or said selected part of application programs.

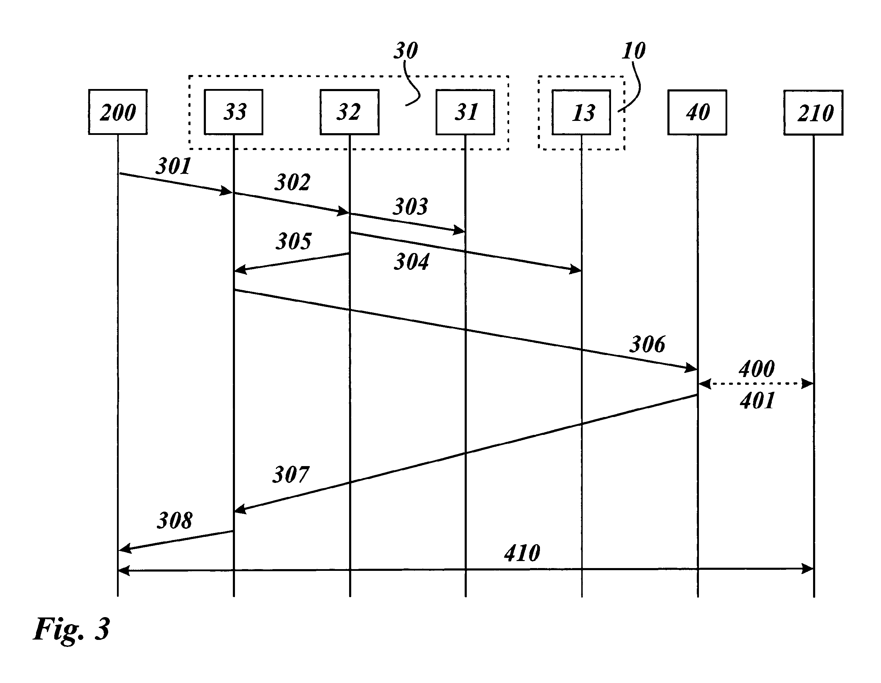

Based on the scheme described in Fig. 2, Fig. 3 shows a message flow diagram comprising a part of the signalling messages to request and reserve the bandwidth required for a session to be established between a user agent client (= UAC) 200 and a user agent server (= UAS) 210.

Initially, the UAC 200 sends a service request SIP INVITE 301 to the AF 33 of the ASP, including a SDP descriptor of the UAC 200 with a list of codecs (= codec list) specifying the codecs which are supported by the UAC 200 for the session requested by the UAC 200. The AF 33 sends a request 302 for the required resources for that session to the resource scheduler 32, the request 302 comprising the codec list and a list of corresponding bandwidths, respectively. The resource scheduler 32 requests 303 these resources inside network 30, e.g., by sending the request 303 to the service edge node 31, and reserves the maximum possible bandwidth out of the codec list. Further, the resource scheduler 32 requests 304 these resources from the access provider and from the responsible resource manager of the access provider network 10, i.e., the A-RACF 13, respectively.

The A-RACF 13 in turn has to check the availability of resources inside the access network 10 and reserve the maximum possible bandwidth out of the codec list. The resource scheduler 32 signals 305 the reserved resources to the AF 33. If one or more certain codecs included in the codec list are not possible to use for the session because of unavailability of corresponding network resources, the AF 33 is able to remove the respective one or more codecs from the codec list, i.e., to reduce the codec list in the SDP of the SIP signaling message. The AF 33 of the access service provider network 10 forwards 306 the SIP signaling to a next involved AF 40 of another ASP. The next involved AF 40 cares for the reservation of the requested bandwidth resources in their network, too. Likewise, every network provider involved in the end-to-end connection between the UAC 200 and the UAS 210 reserves the required maximum bandwidth in their own network. Eventually, the service request SIP INVITE reaches 400 the UAS 210.

The UAS 210 replies to the SIP INVITE with a 200 OK message 401 comprising a list of codecs supported by the UAS 210 in the SDP. The AF 33 receives, via the AF 40, the reply 307 to the signaling message 306 containing the codec list of the callee in the SDP. The AF 33 would now be able to modify/update the reserved bandwidth, if the codecs offered by the UAS 210 would require less bandwidth. Due to the aforementioned overbooking mechanism by all involved network providers, however, this is not necessary and would only create additional signaling load. Then, the AF 33 forwards the signaling message 308 to the UAS 200

Consequently the ASP of the application network 30, and of course all other involved service providers in the end-to-end scenario, can reserve the maximum available bandwidth in the respective part of the network for the session to established, independently of the real used bandwidth, as the involved user agents 200, 210 will choose autonomously one of the possible codecs out of the codec list after negotiation on signalling level (e.g., by using SIP) between caller and callee (INVITE - 200 OK - ACK). This codec list can of course be reduced by the AFs of the different ASPs when resources requested from the AF or the SPDF, respectively, are not sufficient for all codecs. This prevents from selecting a codec by the caller or callee which is not covered by the reserved bandwidth in the end-to-end connection.

Thus, after reservation of the maximum bandwidth in the involved networks 10, 30, the session 410 between the terminals 200 and 210 runs on an actual bandwidth negotiated on by the terminals 200 and 210.

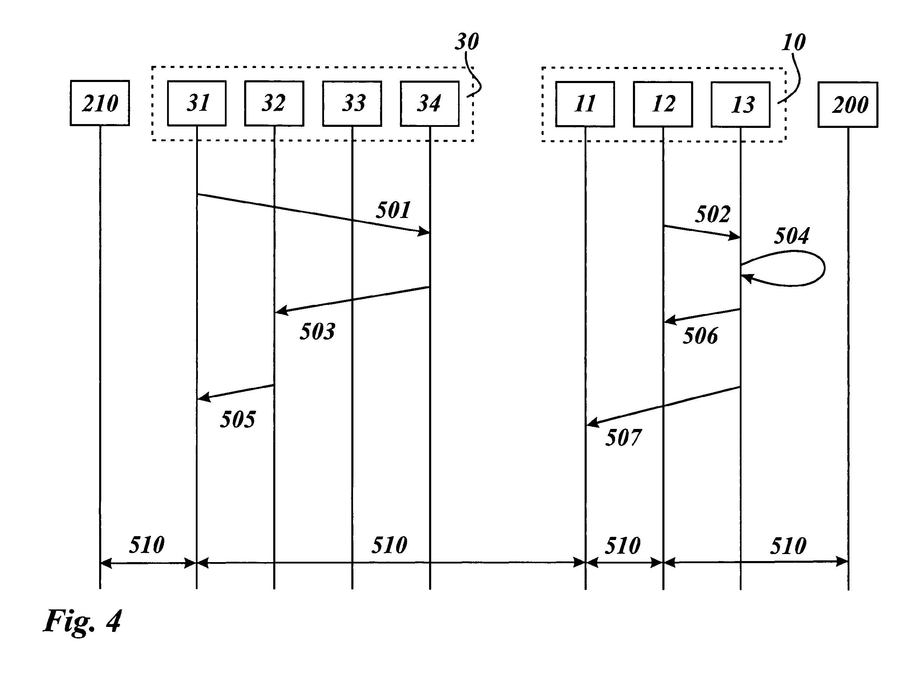

Based on the architecture described in Fig. 2, Fig. 4 shows a message flow diagram comprising a part of the signalling messages to adapt the initially reserved bandwidth to the actually measured traffic volume.

The service edge node 31 of the application network 30 measures the traffic volume associated with the established session at a bottleneck of the network 30 and reports 501 the measurement result to the dedicated QoS manager unit 34. Likewise, the access edge node 12 of the access network 10 measures the traffic volume associated with the established session at a bottleneck of the network 10 and reports 502 the measurement result to the additional QoS module implemented into the A-RACF 13.

Upon receipt of the measurement result, the dedicated QoS manager unit 34 determines, preferably with reference to associated user/statistics data bases, an updated bandwidth adapted to the actually used bandwidth and reports 503 the updated bandwidth to the resource scheduler 32 of the network 30. Likewise, upon receipt of the measurement result, the additional QoS module implemented into the A-RACF 13 determines, preferably with reference to associated user/statistics data bases, an updated bandwidth adapted to the actually used bandwidth and reports 504 the updated bandwidth to the A-RACF 13, representing the "normal" resource manager of the network 10.

After receipt of the updated bandwidth information, the resource scheduler 32 transmits 505 this update information to all network nodes involved in the transport of the packets associated with the session, e.g., to the service edge node 31. Likewise, after receipt of the updated bandwidth information, the A-RACF 13 transmits 506, 507 this update information to all network nodes involved in the transport of the packets associated with the session, e.g., to the access node 11 and the access edge node 12.

Thus, after updating the bandwidth allocated to the session, the session 510 between the terminals 200 and 210 runs on an adapted bandwidth across the involved network nodes 11, 12 and 31.

## Claims

1. A method of providing quality of service in an IP-based real-time communication session between a calling party associated with a first device (100) and a called party associated with a second device (110), the method comprising the steps of:
setting up a connection (105) between the first device (100) and the second device (110) via at least one network (2, 3) for an establishment of said real-time communication session;
reserving network resources for said real-time communication session in the at least one network (2, 3);
**characterized in**
**that** the method comprises the further steps of:
measuring, after the establishment of said real-time communication session, a traffic volume associated with said real-time communication session in the at least one network (2, 3); and
dynamically adapting the reservation of network resources on the basis of said measurement.

2. The method of claim 1,
**characterized in**
**that** the method comprises the further steps of:
determining a list of codecs supported by the first device (100) and the second device (110) with regard to the real-time communication session to be established;
reserving a maximum amount of network resources associated with said list of codecs for said real-time communication session in the at least one network (2, 3);
deriving an actually used amount of network resources from the measured traffic volume; and
decreasing the amount of network resources reserved in the at least one network (2, 3) to the actually used amount of network resources based on the measured traffic volume.

3. The method of claim 1,
**characterized in**
**that** the method comprises the further steps of:
establishing and updating statistics about network resources required for a specific real-time communication session on the basis of said measurement;
reserving network resources for said real-time communication session in the at least one network (2, 3) based on said statistics.

4. The method of claim 3,
**characterized in**
**that** said statistics indicate network resources required for a real-time communication session as a function of session parameters, and/or that said statistics are kept with different granularities ranging from an average value covering an entirety of the at least one network (2, 3) down to a user-specific value.

5. The method of claim 1,
**characterized in**
**that** the method comprises the further steps of:
establishing and updating statistics about network resources required for a specific real-time communication session type on the basis of said measurement;
reserving network resources for said real-time communication session in the at least one network (2, 3) based on said statistics;
deriving an actually used amount of network resources from the measured traffic volume; and
decreasing the amount of network resources reserved in the at least one network (2, 3) to the actually used amount of network resources based on the measured traffic volume.

6. The method of claim 3 or 5,
**characterized in**
**that** the method comprises the further steps of:
determining, based on IP-adresses of the first device (100) and/or the second device (110), the identity of the calling party and/or the called party;
accessing a user data base specifying user-specific data associated with the calling party and/or the called party;
adapting the reservation of the network resources based on the specifications given in the user data base.

7. The method of claim 1,
**characterized in**
**that** the method comprises the further step of:
measuring said traffic volume associated with said real-time communication session at one or more network edge nodes of said at least one network (2, 3), particularly at an access edge node or a service edge node.

8. The method of claim 1,
**characterized in**
**that** the method comprises the further step of:
measuring said traffic volume associated with said real-time communication session by determining a packet rate of packets associated with said real-time communication session during the established real-time communication session.

9. The method of claim 1,
**characterized in**
**that** the method comprises the further steps of:
admitting the establishment of an additional real-time communication session in the at least one network (2, 3) by using network resources released by said adaptation of the reservation of network resources; overbooking in this manner the network resources of the at least one network (2, 3) to a maximal extent defined on the basis of the measured traffic volume.

10. A quality of service manager (260, 360) for providing quality of service in an IP-based real-time communication session established between a calling party associated with a first device (100) and a called party associated with a second device (110) via at least one network (2, 3), wherein network resources for said real-time communication session are reserved in said at least one network (2, 3),
**characterized in**
**that** the quality of service manager (260, 360) comprises an interface (261, 361) adapted to receive a measurement of a traffic volume associated with said real-time communication session in the network (2, 3) after the establishment of said real-time communication session and a control unit (262, 362) adapted to control a dynamic adaptation of the reservation of network resources on the basis of said measurement received after the establishment of said real-time communication session.
